Europäisches Patentamt

European Patent Office

Office européen des brevets

(19)

(11) **EP 0 877 266 A1**

(12) **DEMANDE DE BREVET EUROPEEN**

(43) Date de publication:
**11.11.1998 Bulletin 1998/46**

(51) Int Cl.⁶: **G02B 6/34**, G02B 6/293,
G02B 6/28, G01J 3/18

(21) Numéro de dépôt: **98401073.6**

(22) Date de dépôt: **30.04.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **09.05.1997 FR 9705737**

(71) Demandeur: **INSTRUMENTS S.A.**
**F-75001 Paris (FR)**

(72) Inventeur: **Laude, Jean-Pierre**
**91690 St-Cyr-La Riviere par Saclas (FR)**

(74) Mandataire: **Michelet, Alain et al**
**Cabinet Harlé et Phélip**
**7, rue de Madrid**
**75008 Paris (FR)**

(54) **Dispositif optique sélectif et multiplexeur-démultiplexeur en longueur d'onde**

(57) La présente invention concerne un dispositif optique sélectif en longueur d'onde comportant un réseau bidimensionnel (6) et étant représenté par une fonction d'appareil, caractérisé en ce qu'il comporte des moyens (11) de modification de l'amplitude complexe du champ électromagnétique de l'onde lumineuse, selon une fonction de filtrage, assurant une dilatation de la tache image en lumière monochromatique dans la direction de la dispersion spectrale.

L'invention concerne également un multiplexeur-démultiplexeur en longueur d'onde à fibres optiques comportant un miroir (9) et un réseau (6), l'axe optique du miroir traversant le plan dudit réseau et parallèle aux traits de celui-ci, caractérisé en ce qu'il comporte un filtre (11) à proximité du miroir assurant le contrôle de la fonction d'appareil dudit multiplexeur-démultiplexeur.

FIG.3

**Description**

La présente invention concerne un dispositif optique sélectif en longueur d'onde comportant un système dispersif. Il peut être utilisé dans des sélecteurs de longueur d'onde et, plus particulièrement, dans les multiplexeurs-démultiplexeurs à fibres optiques pour les installations de télétransmissions par fibres optiques.

On connaît déjà de tels multiplexeurs-démultiplexeurs qui ont été décrits, puis progressivement perfectionnés, en particulier dans les brevets français FR-2.543.768, FR-2.519.148, FR-2.479.981, FR-2.496.260 et dans le brevet européen EP-0.196.963.

On entend ici par multiplexeurs-démultiplexeurs à fibres optiques, des dispositifs dans lesquels les ondes lumineuses d'entrée et de sortie sont propagées par des fibres optiques.

L'invention s'applique également dans les routeurs à fibres optiques dans lesquels un nombre variable de flux d'entrée, ayant chacun une longueur d'onde particulière, propagés par des fibres optiques spatialement distinctes, sont adressés sur un nombre éventuellement différent de fibres de sorties.

Dans ces différents dispositifs, un système dispersif, en général un réseau, réalise le couplage, pour une longueur d'onde donnée entre une sortie et une entrée, généralement entre une fibre de sortie et une fibre d'entrée.

Le système dispersif peut aussi être constitué par un ensemble de guides d'onde définissant des chemins optiques de longueurs différentes, tels que des réseaux de phase réalisés en optique intégrée (arrayed waveguide grating). Ces guides d'onde peuvent aussi être des fibres optiques.

On définit ainsi un canal qui a, bien entendu, une certaine largeur spectrale $\Delta\lambda$.

On appelle fonction d'appareil de ces différents dispositifs et, en particulier, des dispositifs optiques sélectifs en longueur d'onde, leur réponse, en fonction de la longueur d'onde, en présence d'une source lumineuse d'entrée étendue en longueur d'onde dont l'intensité est supposée uniforme, quelle que soit la longueur d'onde considérée.

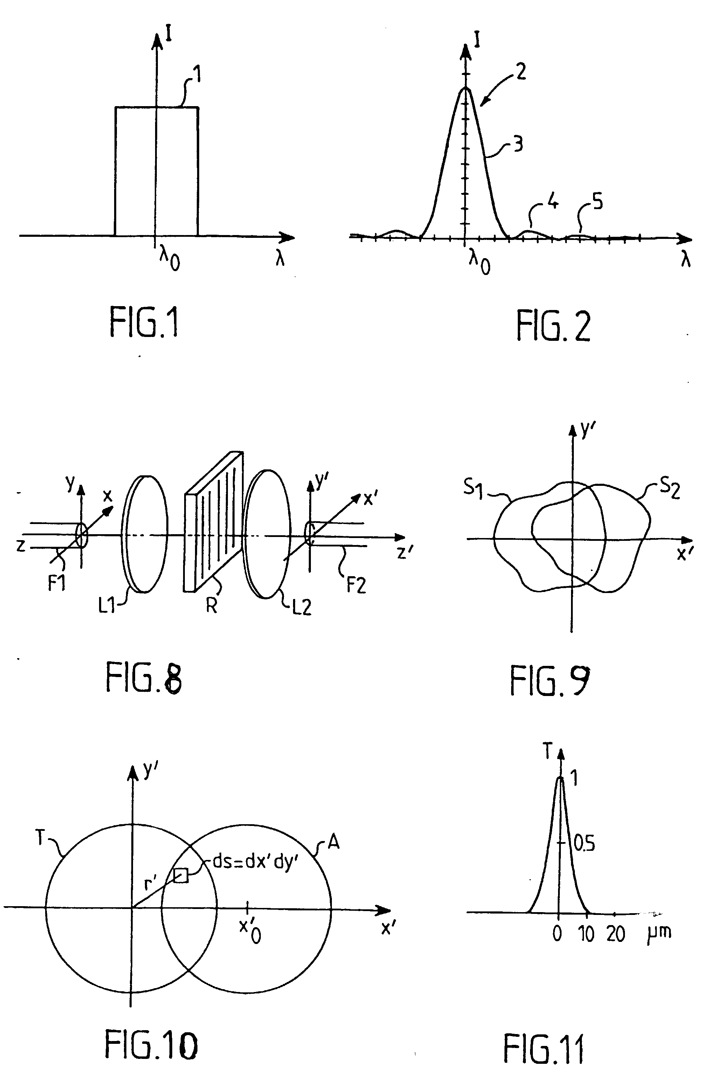

La fonction d'appareil représentant l'intensité I de l'énergie lumineuse transmise en fonction de la longueur d'onde $\lambda$ d'un dispositif idéal a la forme de créneau 1 représenté sur la figure 1, il transmet de manière uniforme une bande de longueur d'onde $\Delta\lambda$ centrée sur la longueur d'onde $\lambda_o$ et ne transmet aucune énergie à des longueurs d'onde en dehors de cette bande.

En pratique, un système conventionnel a une fonction d'appareil représentant l'intensité I de l'énergie lumineuse transmise en fonction de la longueur d'onde $\lambda$ de la forme 2 représentée sur la figure 2 dont la forme se rapproche d'une gaussienne autour de la longueur d'onde $\lambda_o$ avec éventuellement des lobes secondaires 4, 5.

Dans le document US-5.412.744, il est décrit une technique pour produire une bande passante plate dans un multiplexeur en longueur d'onde. L'appareil exposé comporte deux guides d'onde de sortie couplés l'un à l'autre.

Le document US-5.467.418 décrit un appareil incluant des premiers guides d'onde d'entrée et de sortie séparés par une première région libre et des seconds guides d'onde d'entrée et de sortie séparés par une seconde région libre. Les premiers guides d'onde de sortie et les seconds guides d'onde d'entrée sont reliés respectivement par des guides d'onde de longueurs inégales formant un réseau optique. L'appareil produit une bande passante relativement large et un espacement des voies relativement étroit pour un niveau de diaphonie donné.

Le but de la présente invention est d'améliorer un dispositif réel, de façon à rapprocher sa fonction d'appareil de la fonction d'appareil idéale définie plus haut.

Plus particulièrement, dans le cas des multiplexeurs-démultiplexeurs ou des routeurs, l'objectif est de permettre l'exploitation simultanée d'un grand nombre de canaux, chacun de ces canaux centré sur une longueur d'onde $\lambda_i$ devant avoir une largeur spectrale $\Delta\lambda$ aussi grande que possible, tout en évitant une quelconque diaphotie.

Il y a diaphotie lorsqu'une partie de l'énergie d'un canal est partiellement mélangée à l'énergie d'un canal adjacent. Il est bien connu que la diaphotie perturbe les communications et que les dispositifs présentant un taux de diaphotie excessif sont en pratique inutilisables.

A cet effet, le dispositif optique sélectif en longueur d'onde de l'invention qui comporte un système dispersif, est représenté par une fonction d'appareil et comporte des moyens de modification de l'amplitude complexe du champ électromagnétique de l'onde lumineuse, selon une fonction de filtrage, assurant une dilatation de la tache image en lumière monochromatique dans la direction de la dispersion spectrale. Selon l'invention, le système dispersif est un réseau bidimensionnel.

Selon différents modes de réalisation préférés présentant chacun ses avantages particuliers et susceptibles d'être utilisés en combinaison selon toutes leurs combinaisons techniquement possibles :

- les moyens de modification de l'amplitude complexe du champ électromagnétique sont un filtre placé dans une zone où l'onde lumineuse est dilatée,
- le dispositif fait partie d'un multiplexeur-démultiplexeur,
- le dispositif fait partie d'un sélecteur de longueur d'onde, par exemple d'un spectromètre,
- le filtre présente une ouverture approximativement elliptique dont la grande dimension est parallèle aux traits du réseau,

- le filtre présente une ouverture approximativement hyperbolique dont la grande dimension est parallèle aux traits du réseau,
- le réseau est un réseau holographique ou à traits gravés,

L'invention concerne également un multiplexeur-démultiplexeur en longueur d'onde à fibres optiques comportant un filtre placé dans une zone où l'onde lumineuse est dilatée, assurant le contrôle de la fonction d'appareil dudit multiplexeur-démultiplexeur. Selon l'invention, le multiplexeur-démultiplexeur comporte un miroir et un réseau, l'axe central du miroir étant contenu dans le plan dudit réseau et parallèle aux traits de celui-ci.

Dans ces différents modes de réalisation, les dispositions suivantes sont particulièrement avantageuses :

- le filtre est à proximité du miroir ou du réseau,
- le filtre est un filtre spatial,
- le filtre comporte deux zones et produit un déphasage relatif entre ces deux zones,
- le déphasage est de $\pi$,
- le filtre présente une ouverture de forme allongée dans le sens parallèle aux traits du réseau,
- le filtre présente une ouverture approximativement rectangulaire dont la grande dimension est parallèle aux traits du réseau,
- le filtre présente une ouverture approximativement elliptique dont la grande dimension est parallèle aux traits du réseau,
- le filtre présente une ouverture approximativement hyperbolique dont la grande dimension est parallèle aux traits du réseau.

L'invention sera décrite ci-après en détail, en référence aux dessins annexés dans lesquels :

- la figure 1 représente la fonction d'appareil idéale d'un dispositif optique sélectif en longueur d'onde ;
- la figure 2 représente la fonction d'appareil en intensité d'un dispositif optique sélectif en longueur d'onde réel, de l'art antérieur ;
- la figure 3 est une représentation d'un démultiplexeur à réseau mettant en oeuvre l'invention ;
- la figure 4 est une représentation d'un multiplexeur à réseau intégré sur un substrat silicium mettant en oeuvre l'invention ;
- la figure 5 est la représentation schématique de la fonction de filtrage d'un premier type de filtre par rapport à la fonction de filtrage en amplitude idéale ;
- la figure 6 est une représentation schématique de la fonction de filtrage d'un deuxième type de filtre par rapport à la fonction de filtrage en amplitude idéale ;
- la figure 7 est une représentation schématique de la fonction de filtrage d'un troisième type de filtre par rapport à la fonction de filtrage en amplitude idéale ;
- la figure 8 est une représentation schématique d'un dispositif sélectif en longueur d'onde selon l'invention ;
- la figure 9 est une représentation de la transmission dans le plan de sortie du dispositif de la figure 8 ;
- la figure 10 est la transposition de la figure 9 dans le cas de fibre monomode ;
- la figure 11 est la fonction de transmission en fonction de la distance entre le centre de la fibre de sortie et le centre de l'image de la fibre d'entrée ;
- la figure 12 est une représentation schématique de la fente de sortie d'un dispositif sélectif par rapport à l'image de la fibre d'entrée dans le plan de sortie ;
- la figure 13 est une représentation faisant apparaître les paramètres utilisés pour la description des phénomènes mis en jeu.

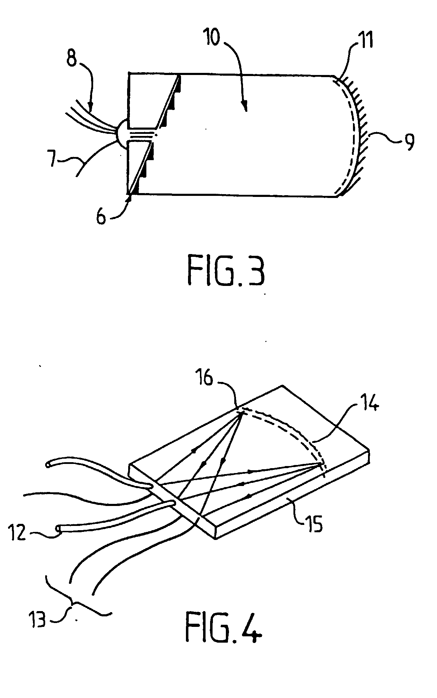

L'invention concerne un dispositif optique sélectif en longueur d'onde tel que représenté, par exemple, sur les figures 3 et 4. On se référera tout d'abord à la figure 3 qui représente un multiplexeur-démultiplexeur à fibres. Il comporte un système dispersif, constitué par un réseau 6, une fibre d'entrée 7 qui alimente le dispositif en un flux lumineux multiplexé et un peigne de fibres de sortie 8 qui fournit des flux différenciés pour chacune des longueurs d'onde. Les extrémités de ces fibres 8 sont placées au centre du réseau 6, lui-même approximativement au foyer d'un miroir concave 9. L'espace 10 situé entre le réseau 6 et le miroir 9 peut recevoir différents composants optiques permettant, en fonction des besoins, d'améliorer les propriétés du système. Le réseau 6 peut être holographique ou gravé.

On a constaté que des moyens de modification de l'amplitude complexe du champ magnétique de l'onde lumineuse permettent d'assurer une dilatation de la tache image en lumière monochromatique dans la direction de la dispersion spectrale et par là, d'améliorer la fonction d'appareil de ce dispositif. Ces moyens de modification de l'amplitude complexe du champ électromagnétique de l'onde lumineuse sont avantageusement constitués par un filtre 11 qui peut être, soit un filtre spatial dont le contour présente une grande dimension et une petite dimension, la grande dimension

3

étant parallèle aux traits du réseau 6, soit un filtre de phase présentant une zone centrale n'affectant pas l'onde lumineuse et des zones latérales introduisant un déphasage de $\Pi$. La zone centrale comporte une petite et une grande dimension et la grande dimension est parallèle aux traits du réseau. Avantageusement, la petite dimension de la zone centrale s'inscrit à l'intérieur du lobe central représentant l'amplitude lumineuse en l'absence de filtre.

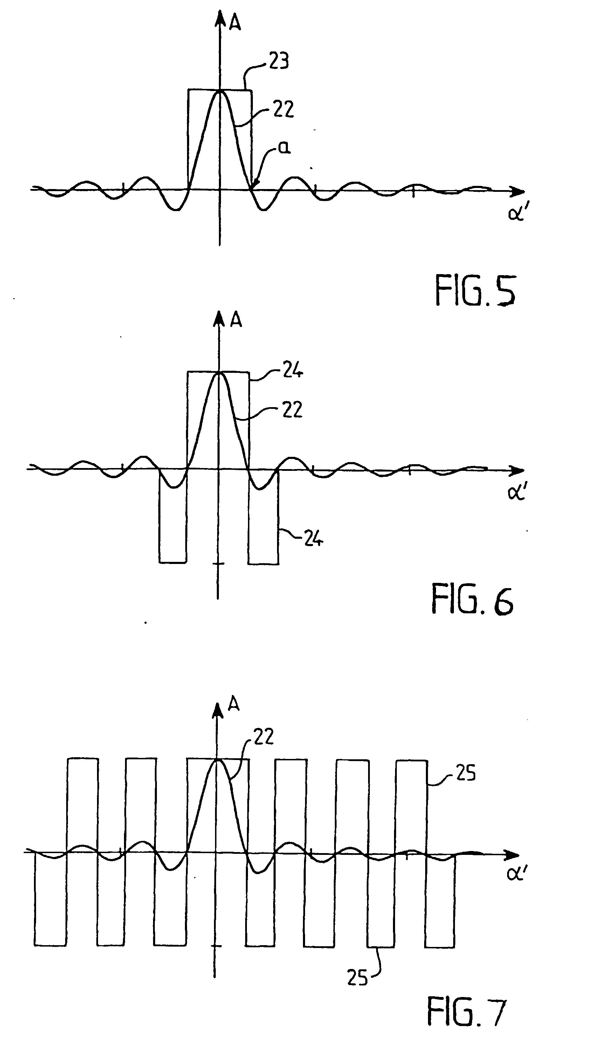

On obtient un résultat encore amélioré en utilisant un filtre présentant une succession de zones introduisant, respectivement un déphasage de $\Pi$ ou aucun déphasage, et dont les étendues géométriques correspondent aux différents lobes d'un filtre théorique d'amplitude complexe idéale, représenté par la courbe 22 des figures 5, 6 et 7. De manière générale, on réalise une fonction de filtrage spatial sur une sphère de référence qui peut être choisie de manière presque quelconque entre l'entrée et la sortie du dispositif optique. En pratique, son rayon doit cependant être grand par rapport au diamètre du coeur des fibres. Une bonne solution est de choisir cette sphère S dans une zone où le faisceau est bien dilaté, par exemple au voisinage de l'une des pupilles entrée, sortie ou intermédiaire du dispositif. Dans le cas d'un multiplexeur/démultiplexeur à fibres tel que celui représenté sur la figure 3, le faisceau est dilaté, par exemple, au voisinage du miroir ou du réseau.

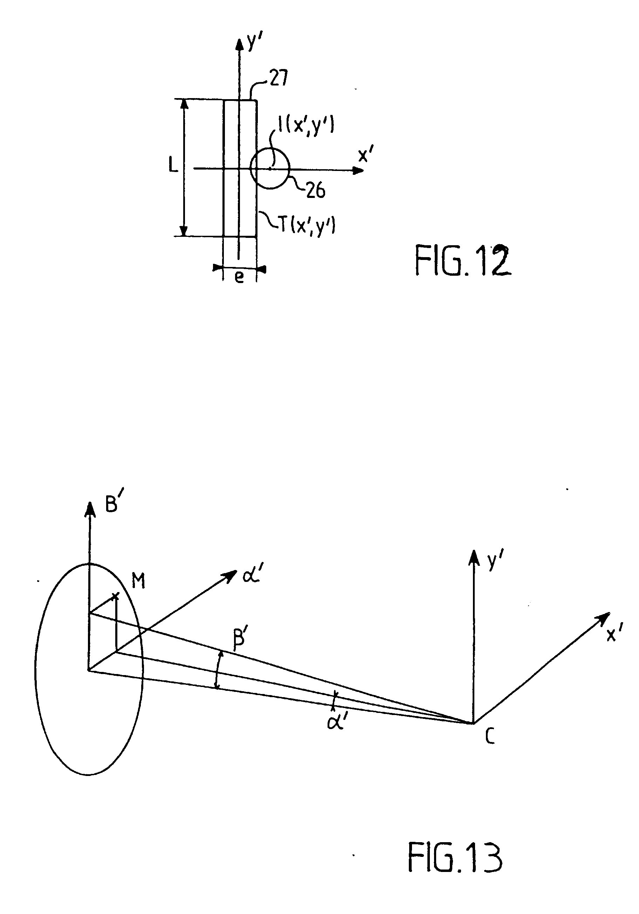

Dans la pratique, d'une sphère S de grand rayon et pour des ouvertures numériques typiques, en sortie de fibre inférieure à 0,2, on pourra réaliser la fonction de filtrage spatial dans un plan tangent à la sphère S. Sur la figure 13, C représente le centre du plan image, M est le plan courant de la pupille image, le point M est, vu de C, sous les angles $\alpha'$ et $\beta'$ qui peuvent donc aussi être les coordonnées de ce point dans son plan. En se référant aux notations $\alpha'$ et $\beta'$ de la figure 13, une fonction de filtrage idéal serait du type

$$A(\alpha') = \frac{\sin \Pi a \alpha'}{\Pi a \alpha'}$$

ce qui est difficile à réaliser. a est une constante dépendant des paramètres géométriques du système optique. Il est donc possible comme indiqué plus haut de simuler, plus simplement le lobe central de cette fonction $A(\alpha')$ 22 par une fonction rectangle 23 de transmission telle que

$$f(\alpha') = \frac{1}{b} \operatorname{Re} ct\left(\frac{\alpha'}{b}\right)$$

ce qui est représenté sur la figure 6. b est choisi de manière à venir tronquer les bords de la fonction gaussienne exp $(-\Pi^2 \omega_o (\alpha'^2 + \beta'^2))$.

Avantageusement, on effectue la fonction de filtrage, comme représenté sur la figure 6, sur le lobe central et les premiers lobes latéraux de part et d'autre du lobe central par la fonction 24, en gardant une transmission constante sur une fraction de la fonction gaussienne et en inversant la phase sur les bords de la fonction gaussienne. On obtient alors une inversion de phase sur les lobes latéraux de la fonction $A(\alpha')$. Ce résultat est obtenu avec un échelon de phase réalisé par un traitement diélectrique d'épaisseur optique ne = $\lambda/2$ où n est l'indice de la couche et e son épaisseur.

On peut poursuivre le filtrage, comme représenté sur la figure 7 par la fonction 25, sur des lobes supplémentaires en inversant la phase pour chaque valeur négative de la fonction de transmission

$$\left[\frac{\sin(\Pi a \alpha')}{\Pi a \alpha'}\right]^2$$

Cependant, les fonctions de filtrage ainsi réalisées présentent des fronts raides de variation de l'amplitude ou de la phase en fonction de $\alpha'$. A ces variations, vont correspondre dans le plan x' et y', des maxima secondaires qui peuvent être gênants. Leur position en x' dépend des valeurs des positions de transition rapide en $\alpha'$: $\alpha'_1$ $\alpha'_2$ $\alpha'_3$... $\alpha'_n$.

Cet effet donnera des petits rebonds dans la transmission de chaque canal en fonction de la longueur d'onde.

Il est toutefois possible d'adoucir ces transitions par une transition progressive en amplitude ou en phase.

On peut aussi utiliser la dimension selon $\beta'$. Les contours des transitions dans le plan $\alpha'$, $\beta'$ sont alors variables selon $\alpha'$ et $\beta'$, ce qui produit une variation de la position en y', c'est-à-dire aussi en $\lambda$ des rebonds avec x'.

Des résultats analogues peuvent être obtenus dans le dispositif réalisé en optique intégrée représenté sur-la figure 4. Sur cette figure, une fibre d'entrée 12 et un peigne de fibres de sortie 13 sont couplés au réseau intégré 14 qui est porté par un substrat silicium 15. Un filtre 16 est intégré pour produire les modifications de l'amplitude complexe du champ électromagnétique recherché.

Les différents filtres dont les caractéristiques ont été indiquées plus haut, donnent des résultats satisfaisants et améliorent significativement les dispositifs sélectifs traditionnels.

L'analyse théorique suivante fournit une explication des phénomènes mis en jeu. Elle permet de définir des filtres qui peuvent être utilisés en fonction des propriétés particulières de la fonction d'appareil que l'on veut obtenir pour une utilisation particulière.

Pour l'analyse théorique, nous nous plaçons dans le cas d'un dispositif à fibres optiques, tel que représenté sur la figure 8, pour calculer la fonction de transmission de la fibre d'entrée $F_1$ vers la fibre de sortie $F_2$, ou directement vers un récepteur $F_2$ ou une ouverture $F_2$ de réception de lumière dans le plan x'y'.

La fibre $F_1$ dont l'extrémité polie, perpendiculaire à l'axe zz', est placée au foyer d'un système optique $L_1$. L'image par le système optique $L_1$, R, $L_2$ où $L_1$ et $L_2$ sont des lentilles, de l'extrémité de $F_1$ se forme dans le plan focal x'y' de $L_2$, après dispersion angulaire sur le disperseur R (généralement un réseau classique, holographique, ou un réseau de phase fait en guides d'ondes du type dit "arrayed waveguide grating").

L'extrémité de $F_1$ est située dans le plan xy, perpendiculaire à l'axe z. Son image est située dans le plan image x'y', perpendiculaire à l'axe z' (dans le cas des guides d'ondes y' = o).

Nous allons d'abord calculer le flux $\Phi$ transmis dans $F_2$ en fonction de la variation de la longueur d'onde $\lambda$ de la lumière délivrée par $L_2$.

Nous supposerons, pour simplifier, dans tout ce qui suit, que le grandissement des systèmes optiques est 1 et que le couple $L_1$ et $L_2$ est afocal.

Nous avons représenté sur la figure 9 ce qui se passe dans le plan x'y'.

La fonction A(x', y') limitée à $S_1$ représente la répartition d'amplitude incidente en x'y'. La fonction T(x', y') limitée à $S_2$ représente la fonction de transmission en amplitude. L'amplitude dA induite en $F_2$ pour une largeur spectrale élémentaire $d\lambda$ est donc :

$$dA = A(x', y') \, T(x', y') \, d\lambda$$

Lorsque $\lambda$ varie, la fonction A se translate dans le plan x'y'.

La dispersion étant supposée linéaire selon x' :

$$\lambda - \lambda_o = k \, (x' - x'_o)$$

(Ceci est une approximation dans laquelle on assimile le sinus de l'angle de diffraction avec le premier terme de son développement limité.)

Le flux $\Phi$ est le module carré de la corrélation de A avec T, soit :

$$\Phi = \left| K.\!\iint A(x'-x'_o, y')T(x', y')dx'dy' \right|^2$$

Pour des fibres monomodes, dans l'approximation gaussienne, avec un rayon de mode $\omega'_o$ représentant la demi-largeur de la répartition d'amplitude A à 1/e, on obtient :

$$A = \exp-\left[ \frac{r'}{\omega'_o} \right]^2$$

Pour un système optique parfait et un réseau parfait à traits parallèles et équidistants, et dans le cas où $F_2$ est une fibre monomode identique à la fibre d'entrée $F_1$, avec les conventions représentées sur la figure 10, $\Phi$ peut se mettre sous la forme suivante : Avec

$$r'^2 = x'^2 + y'^2 :$$

$$\Phi = \left| K \int_{-\infty}^{+\infty} \int_{-\infty}^{+\infty} \exp-\left[\frac{x'^2+y'^2}{\omega'^2_o}\right] \exp-\left[\frac{(x'-x'_o)^2+y^2}{\omega'^2_o}\right] dx'dy' \right|^2$$

D'où :

$$\Phi = \left| K \int_{-\infty}^{+\infty} \exp-\left[\frac{2y'^2}{\omega'^2_o}\right] dy' \int_{-\infty}^{+\infty} \exp-\left[\frac{x'^2}{\omega'^2_o}\right] \exp-\left[\frac{(x'-x'_o)^2}{\omega'^2_o}\right] dx' \right|^2$$

Seule la deuxième intégrale dépend de $x'_o$. On peut considérer qu'elle représente une fonction d'autocorrélation ($\otimes$ est le signe de corrélation) :

$$\left[ \exp-\left(\frac{x'^2}{\omega'^2}\right) \otimes \exp-\left(\frac{(x'-x'_o)^2}{\omega'^2_o}\right) \right]_{(x'_o)} = \left[ g(x') \otimes g(-x'_o) \right]_{(x'_o)}$$

Or, on peut montrer (voir JP Laude - Le multiplexage de longueur d'onde - Masson Ed. Paris 1992).

$$\left[ g(x') \otimes g(-x'_o) \right] = \sqrt{\Pi} \frac{\omega'_o}{\sqrt{2}} \exp\left(-\frac{x'^2_o}{2\omega^2_o}\right)$$

soit :

$$\Phi = k \exp-\left(\frac{x'_o}{\omega'_o}\right)^2$$

Ainsi, le facteur de transmission, en fonction de la longueur d'onde, se superpose exactement à la fonction représentant la répartition d'amplitude A, lorsque l'on trace ces deux fonctions sur un même graphique, avec pour la première des abscisses en $(\lambda-\lambda_o)/\alpha$ et pour la seconde des abscisses $x' - x'_o$. (Les ordonnées sont adaptées pour l'égalisation des maxima).

La largeur à mi-hauteur de la fonction F représentée sur la figure 11 est :

$$2\omega'_o \sqrt{\ln 2} = 1,6651 \omega'_o$$

Le cas d'une fibre 26 monomode en entrée et d'un élément détecteur 27 rectangulaire en sortie (par exemple un élément d'une barrette de diodes) est représenté sur la figure 12.

Le dispositif de couplage est supposé identique au précédent (voir figure 9), mais un élément détecteur rectangulaire est placé à l'origine de x'y', sa grande longueur étant parallèle aux traits du réseau.

La transmission T(x', y') est supposée uniforme égale à 1 à l'intérieur de l'élément rectangulaire de dimensions beaucoup plus grandes que le diamètre du coeur de la fibre qui correspond à une répartition d'intensité (x', y').

En utilisant cette théorie, on comprend qu'il est possible de modifier la répartition d'amplitude A par une fonction de transmission complexe, par exemple en modifiant la phase et l'amplitude de la surface d'onde au niveau du réseau R de $L_1$ ou de $L_2$ mentionné sur la figure 8.

Dans la tache image de la fibre d'entrée, la répartition III devient ainsi une nouvelle répartition A' qui est représenté par le produit de convolution de A par la réponse percussionnelle du système ($*$ est le signe de convolution) :

$$A' = [A * P]_{(x'_o)}$$

La réponse percussionnelle est la fonction P(x'y') représentant l'amplitude complexe dans le plan x'y' pour un point objet situé en x = 0, y = 0.

On aura alors :

$$F = K \left| \left[ A * P \otimes A \right]_{(x'_o)} \right|^2$$

dans le cas d'un couplage filtre à filtre, et

$$F = K \left[ \left[ A * P \right] \right]^2 \otimes T$$

dans le cas de l'élément détecteur en sortie.

Ainsi, l'invention produit une modification de la réponse percussionnelle par l'effet produit sur la surface d'onde complexe, c'est-à-dire en phase et en amplitude, entre les plans d'entrée xy et de sortie x'y'. Ceci sera fait de préférence dans une zone où la surface d'onde est suffisamment dilatée. Cette modification produit, à toute longueur d'onde utile, une dilatation de l'image en lumière monochromatique d'une source ponctuelle dans la direction de dispersion spectrale. On obtient un aplanissement, à son sommet, de la fonction de transmission $F(x'_o)$ équivalente à la fonction $F(\lambda)$.

Dans le cas de l'élément détecteur, l'intensité dI passant à travers la fente pour une largeur spectrale élémentaire sera :

$$dI = I\,(x',\,y')\,T\,(x',\,y')\,d\lambda$$

Comme précédemment, lorsque $\lambda$ varie, I se translate. On fait l'approximation d'une translation linéaire dans les mêmes conditions. Le flux transmis sera le module de la corrélation de I avec T :

$$\Phi = K. \iint I(x' - x'_o,\, y')T(x',\, y')dx'dy'$$

$$\Phi = I \otimes T$$

La répartition d'intensité dans l'image supposée parfaite de l'extrémité de la fibre monomode est donc :

$$A^2 = A_o^2 \exp\left( -\frac{2r^2}{\omega'^2_o} \right)$$

Les intégrales doubles peuvent être ramenées à des intégrales simples calculables par la méthode de Simpson. Des résultats sont donnés p. 57 et 58 de l'ouvrage cité plus haut dans le cas de l'absence de filtre (JP Laude - Le multiplexage de longueur d'onde - Masson Ed. Paris 1992).

L'analyse des phénomènes à partir du principe de Huygens est représentée sur la figure 13. On sait que le principe de Huygens peut s'exprimer sous forme de transformation de Fourier (référence par exemple A. Maréchal et M. Françon - Traité d'optique instrumentale - Tome 2 Ed. de la Revue d'Optique Paris 1960, pages 11/12 et 25/26).

Le calcul du champ électrique E(x'y') dans le plan de front x'y' fait intervenir la transformée de Fourier de la fonction T représentant la répartition du champ électrique sur une sphère de référence S de rayon R centrée en C. (On peut choisir cette sphère à volonté)

$$E(x'y') = j\frac{R}{\lambda}h(-kR)\iint F(\alpha'\beta')h[-k(\alpha'x'+\beta'y')]d\alpha'd\beta'$$

(la notation h(x) remplace la fonction exp (jx) et k = 2$\Pi$/$\lambda$)

On peut assimiler E(x'y') à A'(x'y') et l'on sait, d'après le théorème de Parseval, que la transformée de Fourier d'un produit de convolution (symbole ici $*$) de deux fonctions est le produit des transformations de Fourier (TF) des deux fonctions prises individuellement.

Aussi,

$$\text{TF } [A*P] = \text{TF } [A] * \text{TF } [P]$$

Dans le cas des fibres monomodes, on a vu quelle est la forme de A :

$$A = A_o \exp\left(-\frac{x^2 + y^2}{\omega_o^2}\right)$$

(x, y ou x', y' selon plan d'entrée ou plan de sortie)

La transformée de Fourier est une gaussienne de la forme :

$$\text{TF}[A] = \sqrt{\Pi}\omega'_o \exp(-\Pi^2\omega_o'^2(\alpha'^2+\beta'^2))$$

Sur S, TF [A] est une fonction gaussienne.

Dans le cas idéal, il faudrait une fonction P telle que :

$$P(x') = 1/a \text{ Rect } (x'/a).$$

A cette fonction, correspondrait une transformée telle que:

$$\text{TF } [P] = (\sin \Pi a \alpha')/\Pi a \alpha'$$

On obtient de bons résultats dans un dispositif représenté sur la figure 3 avec une fente rectangulaire centrée constituant le filtre 11 dont les dimensions sont les suivantes : 12 x 27 mm.

Les autres éléments ont les caractéristiques suivantes :

filtres monomodes SMF 28 de la Société "Corning" (USA)
pas du réseau 6 : 600 t/mm
focale du miroir 9 : 120 mm
distance du centre du réseau 6 au sommet du miroir 9 : 120 mm
espacement relatif des fibres 8 : 125 $\mu$m

On obtient encore de bons résultats avec un filtre déphaseur déphasant du $\Pi$ ayant des dimensions de fente centrale suivantes : 10 mm x 27 mm

et des dimensions de fente latérale suivantes : 5 mm x 27 mm
Les autres éléments ont les valeurs indiquées plus haut.

**Revendications**

1. Dispositif optique sélectif en longueur d'onde comportant un système dispersif (6, 14) et étant représenté par une fonction d'appareil, ledit dispositif comportant des moyens (11, 16) de modification de l'amplitude complexe du champ électromagnétique de l'onde lumineuse, selon une fonction de filtrage, assurant une dilatation de la tache image en lumière monochromatique dans la direction de la dispersion spectrale, caractérisé en ce que ledit système dispersif (16, 14) est un réseau bidimensionnel.

2. Dispositif selon la revendication 1, caractérisé en ce que les moyens (11, 26) de modification de l'amplitude complexe du champ électromagnétique sont un filtre placé dans une zone où l'onde lumineuse est dilatée.

3. Dispositif selon l'une des revendications 1 et 2, caractérisé en ce qu'il fait partie d'un multiplexeur-démultiplexeur.

4. Dispositif selon l'une quelconque des revendications 1 à 3, caractérisé en ce qu'il fait partie d'un sélecteur de longueur d'onde.

5. Dispositif selon l'une quelconque des revendications 1 à 4, caractérisé en ce que le réseau est un réseau holographique.

6. Dispositif selon l'une quelconque des revendications 1 à 4, caractérisé en ce que le réseau est un réseau à traits gravés.

7. Multiplexeur-démultiplexeur en longueur d'onde à fibres optiques comportant un filtre (11) dans une zone où l'onde lumineuse est dilatée assurant le contrôle de la fonction d'appareil dudit multiplexeur-démultiplexeur, caractérisé en ce qu'il comporte un miroir (9) et un réseau (6), l'axe optique du miroir traversant le plan dudit réseau et étant parallèle aux traits de celui-ci.

8. Multiplexeur-démultiplexeur selon la revendication 7, caractérisé en ce que le filtre (11) est à proximité du miroir.

9. Multiplexeur-démultiplexeur selon la revendication 7, caractérisé en ce que le filtre est à proximité du réseau.

10. Dispositif selon l'une des revendications 1 à 9, caractérisé en ce que le filtre (11, 16) est un filtre spatial.

11. Dispositif selon l'une des revendications 1 à 10, caractérisé en ce que le filtre (11, 16) comporte deux zones et produit un déphasage relatif entre ces deux zones.

12. Dispositif selon la revendication 11, caractérisé en ce que le déphasage est de $\pi$.

13. Dispositif selon l'une quelconque des revendications 10 à 12, caractérisé en ce que le filtre présente une ouverture de forme allongée dans un sens parallèle aux traits du réseau.

14. Dispositif selon l'une quelconque des revendications 10 à 12, caractérisé en ce que le filtre présente une ouverture approximativement rectangulaire dont la grande dimension est parallèle aux traits du réseau.

15. Dispositif selon l'une quelconque des revendications 10 à 12, caractérisé en ce que le filtre présente une ouverture approximativement elliptique dont la grande dimension est parallèle aux traits du réseau.

16. Dispositif selon l'une quelconque des revendications 10 à 12, caractérisé en ce que le filtre présente une ouverture approximativement hyperbolique dont la grande dimension est parallèle aux traits du réseau.

17. Dispositif selon l'une quelconque des revendications 10 à 16, caractérisé en ce que la variation de l'amplitude complexe d'une zone à l'autre est progressive.

FIG.1

FIG.2

FIG.8

FIG.9

FIG.10

FIG.11

FIG.3

FIG.4

FIG. 5

FIG. 6

FIG. 7

FIG.12

FIG.13

Office européen
des brevets

**RAPPORT DE RECHERCHE EUROPEENNE**

Numéro de la demande

EP 98 40 1073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 412 744 A (DRAGONE CORRADO) 2 mai 1995<br>* abrégé; figures 1,3,5,9 *<br>* colonne 4, ligne 9 – colonne 5, ligne 31 * | 1-4 | G02B6/34<br>G02B6/293<br>G02B6/28<br>G01J3/18 |
| A | US 5 467 418 A (DRAGONE CORRADO) 14 novembre 1995<br>* abrégé; figures 7,10,12 *<br>* colonne 1, ligne 55 – colonne 2, ligne 15 *<br>* colonne 5, ligne 49 – ligne 60 * | 1 | |
| A | SOOLE J B D ET AL: "USE OF MULTIMODE INTERFERENCE COUPLERS TO BROADEN THE PASSBAND OF WAVELENGTH-DISPERSIVE INTEGRATED WDM FILTERS"<br>IEEE PHOTONICS TECHNOLOGY LETTERS, vol. 8, no. 10, octobre 1996, pages 1340-1342, XP000628952<br>* le document en entier * | 1 | |
| A | WO 97 10525 A (BELL COMMUNICATIONS RES) 20 mars 1997<br>* abrégé; figures 4,7,10,11 *<br>* page 4, ligne 23 – page 5, ligne 13 *<br>* page 10, ligne 15 – page 11, ligne 4 * | 1,7 | **DOMAINES TECHNIQUES RECHERCHES (Int.Cl.6)**<br>G02B |
| A | EP 0 555 778 A (MATSUSHITA ELECTRIC IND CO LTD) 18 août 1993<br>* abrégé; figures 1-3,7 *<br>* colonne 1, ligne 41 – colonne 2, ligne 22 *<br>* colonne 3, ligne 45 – colonne 4, ligne 55 * | 1,5-7, 10,13,14 | |

-/--

Le présent rapport a été établi pour toutes les revendications

| Lieu de la recherche | Date d'achèvement de la recherche | Examinateur |
|---|---|---|
| LA HAYE | 17 juillet 1998 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 98 40 1073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | FR 2 479 981 A (INSTRUMENTS SA) 9 octobre 1981<br>* le document en entier *<br>----- | 1,5-7 | |

DOMAINES TECHNIQUES
RECHERCHES (Int.Cl.6)

Le présent rapport a été établi pour toutes les revendications

| Lieu de la recherche | Date d'achèvement de la recherche | Examinateur |
|---|---|---|
| LA HAYE | 17 juillet 1998 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)